# EUROPÄISCHE PATENTSCHRIFT

(11) **EP 3 116 757 B1**
(45) Veröffentlichungstag und Bekanntmachung des Hinweises auf die Patenterteilung: **25.12.2019**
(21) Anmeldenummer: 15709172.9
(22) Anmeldetag: 11.03.2015
(51) Int. Cl.: B60T 13/02, B60T 13/74, F16D 65/16, F16H 55/08

(54) **AKTUATOR FÜR EINE KRAFTFAHRZEUGBREMSE**
ACTUATOR FOR A MOTOR VEHICLE BRAKE
ACTIONNEUR POUR FREIN DE VÉHICULE AUTOMOBILE

(30) Priorität: 11.03.2014 DE 102014204486; 01.09.2014 DE 102014217403
(43) Veröffentlichungstag der Anmeldung: 18.01.2017
(73) Patentinhaber: Continental Teves AG & Co. OHG, 60488 Frankfurt am Main (DE); Laudenbach Formtechnik GmbH & Co. KG, 78559 Gosheim (DE)
(72) Erfinder: BACH, Uwe, 65527 Niedernhausen (DE); BALZ, Jürgen, 65510 Hünstetten-Oberlibbach (DE); BRANDSTAEDTER, Ralph, 61137 Schöneck (DE); GÄDKE, Martin, 65719 Hofheim/Ts. (DE); HOFFMANN, Jens, 64285 Darmstadt (DE); KRUSE, Martin, 60528 Frankfurt am Main (DE); LAUDENBACH, Franz, 78559 Gosheim (DE); RITTER, Wolfgang, 61440 Oberursel/Ts. (DE); SEFO, Ahmed, 65931 Frankfurt (DE); VON HAYN, Holger, 61118 Bad Vilbel (DE)
(86) Internationale Anmeldenummer: PCT/EP2015/055026
(87) Internationale Veröffentlichungsnummer: WO 2015/135970

(56) Entgegenhaltungen:
- EP-A1- 2 360 045
- WO-A1-02/24397
- WO-A1-2007/104505
- WO-A1-2008/030204
- WO-A1-2008/079011
- DE-A1-102005 059 272
- DE-A1-102008 054 398
- DE-A1-102009 046 209
- DE-U1-202011 106 149
- JP-A- 2000 240 747

## Beschreibung

Die Erfindung betrifft einen Aktuator besonders für eine Kraftfahrzeugradbremse vorzugsweise vom Trommelbremstyp nach den Merkmalen vom Oberbegriff vom Patentanspruch 1.

Aktuatoren für Kraftfahrzeugbremsen umfassen wenigstens einen Elektromotor der ein mehrstufiges Getriebe, insbesondere ein zweistufiges Getriebe, antreibt. Das Getriebe ist als Untersetzungsgetriebe ins Langsame ausgelegt. Dadurch wird der Vorteil erzielt, dass ein vergleichsweise kleiner, kostengünstiger elektrischer Antriebsmotor mit vergleichsweise hoher Nenndrehzahl und verhältnismäßig niedrigem Drehmoment bei geringem Strombedarf ausgewählt werden kann, und wobei das Getriebe eine kinematische Wandlung ermöglicht. Dadurch werden sowohl Kosten als auch Strombedarf und Dimension (Baugröße) des Elektromotors abgesenkt, was durch die Bauraumansprüche sowie die Wandlungseigenschaften vom Getriebe eingetauscht wird. Der Getriebestrang stellt also eine Komponente dar, welche vergleichsweise hohe Drehmomente (zum Zuspannen einer Bremse) in Richtung Abtrieb übertragen, oder unerwünschte Lösetendenz entgegenwirken kann.

Wegen definierter Zuspannkräfte einer Parkbremsfunktion besteht eine entsprechend hohe Beanspruchung durch Biegemomente, Axialkräfte und ähnliches, so dass der Getriebegestaltung vom Aktuator einer Kraftfahrzeugbremse eine gesteigerte und auch sicherheitskritische Bedeutung zukommt.

Aus der DE 10 2006 011 928 B4 geht ein laufruhiger, kompakter sowie kostengünstiger elektromotorischer Radbremsaktuator für eine Feststellbremse eines Kraftfahrzeugs hervor. Dieser Radbremsaktuator umfasst einen Elektromotor der drehfest in einem Getriebegehäuse angeordnet ist, mit einer drehbaren Motorwelle die zwei einstückig im Bereich von einem Ritzelabschnitt unmittelbar schneckenförmig darauf gewunden eingeprägten evolventenverzahnte Ritzelzähne aufweist. Diese kämmen mit einem schräg außenverzahnten Zwischenrad, das gemeinsam mit einem axial versetzt dazu platzierten Ritzel auf identischer Getriebewelle angeordnet ist, und getrieblich mit einem Abtriebsrad verbunden ist. Die Lagerung der Motorwelle ist so, dass der Durchmesser der Motorwelle abgestuft ausgebildet ist, und wobei das abtriebsseitige Motorwellenende in einer Lagerbohrung im Getriebegehäuse drehbar gelagert aufgenommen ist, so dass der Ritzelabschnitt der Motorwelle im Getriebe nicht außer Eingriff gedrängt werden kann.

Die auch bekannte DE 10 2008 054 398 A1 empfiehlt zwei Zahnradgetriebestufen mit einstückig an der Motorwelle ausgeprägtem Ritzelabschnitt. Beide Schriften beschreiben übereinstimmend, dass die Räder der Getriebestufen mit Abstand zueinander im Getriebegehäuse also auf unterschiedlichen, zueinander axial beabstandeten Einbauebenen (Etagen) arrangiert sind.

Evolventenverzahnte Getriebe mit Wenigzahnritzeln finden vielfältige sowie hinreichende Vorbilder, wie beispielsweise gemäß EP 0 997 667 A1 oder Roth, Karlheinz: Zahnradtechnik, Springer Verlag 1998, Berlin, ISBN 3-540-642-36-6, oder Roth, K., Evolventenverzahnungen mit extremen Eigenschaften Teil IIB, Antriebstechnik, Vereinigte Fachverlage, Mainz, DE, Bd. 35, Nr. 9, 1. September 1996, ISSN:0722-8546.

Es ist eine Aufgabe der vorliegenden Erfindung, einen optimierten, auch robotergestützt assemblierbaren Aktuator für eine Kraftfahrzeugbremse vorzuschlagen, der bei verbesserter Lagerung, erhöhter Verdichtung auch hohe Dauerfestigkeit und hohe Zuspannkräfte von Fahrzeugbremsvorrichtungen erträgt, und dessen aber preiswert erstellbarer Getriebestrang besser an die strengen Anforderungen im Automobilbremsenzulieferbereich angepasst ist.

Die Aufgabe wird erfindungsgemäß durch die kennzeichnenden Merkmale von dem unabhängigen Patentanspruch 1 unter Aufspaltung vom Momentenfluss im Getriebe 3 gelöst, indem ein evoloidverzahntes Ritzelbauteil 6 mit zwei Ritzelzähnen 7,8 drehfest an einem freien Ende einer Motorwelle 5 montiert ist, also die Motorwelle 5 frei verlängert ist, und wobei das Ritzelbauteil 6 an seinem Umfang unter einem Untersetzungsverhältnis von mehr als 1:10 synchron mit zwei Zwischenrädern 9,10 kämmt, welche in einer gemeinsamen Montageebene ME arrangiert sind. Es hat sich erwiesen, dass im Ergebnis bei erhöhter Bauteilverdichtung unter Verwendung außenverzahnter Räder ein maximales Untersetzungsverhältnis von mehr als 1:100 unter Verzicht auf komplexe Planetenradgetriebe erzielt wird, und dass nicht nur die Baulänge vom Aktuator 1 verringert sondern auch der Getriebezusammenbau stark erleichtert ist. Besonders hervorzuheben ist das besonders angenehm leise Betriebsgeräusch vom Aktuator 1.

Ganz bewusst wird bei der fliegenden Motorwellenlagerung eine radial elastisch-reversible Querverlagerung von einem Ritzelbauteil 6 in einen schrägverzahnten Zahneingriffsbereich der Zwischenräder 9,10 hinein ermöglicht. Anders ausgedrückt wird durch die erfindungsgemäß "fliegende Lagerung" vom Ritzelbauteil 6 - entgegen Vorurteilen der Fachwelt betreffend die Dauerfestigkeit - Abstand von einer maschinenbautechnisch üblichen massiven Motorwellenlagerung gemäß Stand der Technik genommen. Der erfindungsgemäße Aktuator 1 verfügt folglich über die Besonderheit, dass sich ein freies Motorwellenende mitsamt daran drehfest montiertem Ritzelbauteil 6 unter dem herrschenden Schub zumindest geringfügig sowie selbsttätig und vor allem reversibel elastisch im Eingriff zwischen den beiden Zwischenrädern 9,10 zentriert, ohne jedoch in eine fixe Position eingezwängt zu sein und gleichzeitig das herrschende Moment erträgt. Im Ergebnis wird durch den erweiterten Freiheitsgrad in der vorgegebenen Antriebsstrangkonstellation besondere Laufruhe bei hohen Dauerfestigkeitswerten unter minimalem konstruktivem Aufwand und hoher Verdichtung gewonnen. Die Montage ist vereinfacht und der Einbauraum von einem Motorwellenlager in das Getriebegehäuse 4 ist rationalisiert. Vormontierte Standardelektromotoren können Verwendung finden.

Die Bauweise der Aktuatorik ist weiterhin besonders verdichtet, und auch die Montage der Bauteile ist stark erleichtert, wenn sämtliche Getrieberäder sämtlicher Getriebestufen, einschließlich Abtriebsrad 11, auf einer einzigen, einheitlich-gemeinsamen Montageebene ME in dem Getriebegehäuse 4 angeordnet sind. Dabei wird auch eine stromlos selbsthemmende Parkbremsfunktion mittels Hemmung im Getriebestrang ermöglicht. Besonders bevorzugt ist das Mutter-Spindel-Getriebe vom Rot-Trans-Wandler selbsthemmend ausgebildet, so dass der Rest des Antriebsstrangs, wie insbesondere die Getrieberäder, entlastet sind.

Vorteilhafterweise ist das Ritzelbauteil 6 vollständig aus einem metallischen Werkstoff wie insbesondere aus Stahl, Bronze oder pulvermetallurgisch gesintert mit einem Sackloch 13 gefertigt sowie am freien Ende einer prinzipiell glatten Stahlmotorwelle auf einen Zapfen 14 derselben drehfest aufgesteckt. Das Ritzelbauteil 6 ragt also in Eingriff zwischen die beiden Zwischenräder 9,10, so dass synchrones Kämmen unter erfindungsgemäßer Momentenaufsplittung ermöglicht ist.

Weiter verdichtetes Packaging wird ermöglicht indem die zwei Zwischenräder 9,10 jeweils am Umfang vom Ritzelbauteil 6 weitgehend diametral zueinander versetzt angeordnet sind, so dass das Abtriebsrad 11 in der zweiten Stufe mit besonders geringem Achsabstand a zum Ritzelbauteil 6 auf derselben Montageebene ME sowie synchron zwischen die Schrägverzahnungen der beiden Zwischenräder 9,10 eingreift, und mit diesen kämmt.

Das Ritzelbauteil 6 verfügt zwecks Kerbspannungsreduktion in axialer Verlängerung zu seinem endseitigen Verzahnungsabschnitt 15 über einen zylindrischen Schaftabschnitt 16 (mit Sackloch 13), der zusätzlich mit einem schlanken Übergangsabschnitt 17 versehen ist, und Elastizität in Querrichtung bringt. Ausgehend von einer Stirnseite 18 des motorwellenseitigen Endes vom Ritzelbauteil 6 ist das Sackloch 13 koaxial mit der Motorwelle 5 zur form- und oder kraftschlüssigen sowie drehfesten Aufnahme des Motorwellenende vorgesehen.

Grundsätzlich ist es natürlich möglich, sämtliche Drehachsen d1, d2, d3, d4 von Motorwelle, Getrieberädern etc. zumindest einer ersten Stufe parallel zueinander sowie präzise entlang einer Geraden g (inline) zu arrangieren, um ein einheitliches Drehachsarrangement zu schaffen, und wobei eine Drehachse d4 vom Abtriebsrad orthogonal dazu sowie im Achsabstand a versetzt ist. Zur besonders günstigen Vermeidung von Querkrafteinflüssen, unter Verzicht auf ein gesondertes Motorwellenlager im Getriebe 3 hat es sich in Variation als besonders sinnvoll erwiesen, der Motorwelle 5 in Radialrichtung r zumindest einen geringfügig orthogonal auswärts gerichteten Achsversatz s in Relation zu den beiden Zwischenrädern zu erteilen, so dass der Achsversatz s den Achsabstand a zwischen Motorwelle 5 und Abtriebsrad 11 erhöht. Dadurch werden die selbstzentrierenden Eigenschaften des Ritzelbauteils 6 in Relation zu dem Eingriff zwischen den Zwischenrädern 9,10 positiv unterstützt.

Zur drehbaren Lagerung der Zwischenräder 9, 10 dienen zylindrische Stifte 20,21, mit Enden 22, 22', 23, 23' die im Getriebegehäuse 4 versenkt eingefügt sind. Dies ermöglicht eine robotergerechte Montage indem eine Nabenbohrung 26,27 der Zwischenräder 9, 10 einfach auf ein noch frei herausstehendes Ende vom Stift 20,21 aufgefädelt wird. Auch das Abtriebsrad 11 ist praktisch achsfrei dargestellt, was dessen Herstellung und Handhabung vereinfacht und Gewicht reduziert. Schließlich wird die Herstellung der Räder in Kunststoffspritzgussverfahren vereinfacht. Sämtliche Räder können stirnseitig mit einem axial vorstehenden Stutzen versehen sein, der den Zahnradanlauf im Getriebe unterstützt.

In Axialrichtung ax (diese entspricht der Orienteriung der Motorwelle 5) sind die Zwischenräder 9, 10 durch seitlichen Anlauf direkt also lagerfrei, vorzugsweise unmittelbar im Getriebegehäuse 4 abgestützt, wobei prinzipiell auch eine Scheibe zum Ausgleich und/oder Lastverteilung zwischengefügt sein kann. Das Abtriebsrad 11 ist über die angeschlossene Mutter 28 mit Hilfe von einem Wälzlager 29 im Getriebegehäuse 4 drehbar und axial fest gelagert. Durch synchronen Eingriff der beiden Zwischenräder 9,10 in die Außenverzahnung vom Abtriebsrad 11 wird funktional die Bündelung vom vorher aufgespaltenen Momentenfluss zwecks Ableitung in Richtung Abtrieb ermöglicht.

Das Getriebegehäuse 4 ist einerseits als weitestgehend topfförmig offen vertieftes Wannenbauteil 25 zur Aufnahme der Räder entlang einer Teilungsebene TE derart geteilt ausgebildet, dass sämtliche Räder über eine Öffnung vom Wannenbauteil 25 nacheinander direkt in Montageebene ME im Wannenbauteil 25 platziert werden können. Nach dem Einlegevorgang wird die Öffnung mit einem weitgehend ebenen Deckelbauteil 43 verschlossen, welches sinnvollerweise auch eine Motoraufnahme 31 bereitstellt. Es ist denkbar, die beiden Getriebegehäusebauteile 25, 43 jeweils gesondert modular mit eingefügten Bauteilen vormontiert bereitzustellen, um eine Wertschöpfungskette auf spezialisierte Auftragnehmer wie beispielsweise betreffend Elektromotor 2 oder Getriebe 3 modular verteilt vorzusehen. Zwecks elektrisch 2-poliger Kontaktierung vom Elektromotor 2 ist das Getriebegehäuse 4 entsprechend mit einer elektrischen Anschlussschnittstelle 32 in Form einer 2-pol Buchse ausgerüstet, welche vorzugsweise zwei männlich gestaltete Kontaktmittel 33,34 zum Anschluss eines entsprechenden Gegenstücks von einem Fahrzeugkabelbaum bereitstellt. Im Getriebegehäuse 4 sind dazu passend - sowie elektrisch voneinander isoliert - nicht weiter verdeutlichte Verbindungsmittel zwischen den Kontaktmitteln 33, 34 sowie elektrischen Kontaktfahnen 35,36 vom Elektromotor 2 angeordnet, um räumlich Freiheitsgrade in Platzierung der elektrischen Anschlussschnittstelle 32 zu erhalten. Bevorzugt sind die Verbindungsmittel als in einem Getriebegehäusekunststoffwerkstoff eingebettete, metallisch umgeformte und/oder gebogene Stanzblechplatinen ausgebildet, die ausgehend von der Innenseite des Deckelbauteils 43 elektrisch leitend verlötet oder verschweißt sind. Diese Verbindungsmittel können platinenartig also bei ausreichender elektrischer Trennung der beiden elektrischen Pole vom elektrischen Gleichstrommotor prinzipiell auch einstückig vorgesehen sein.

In einem Boden 24 vom Wannenbauteil 25, wie an Seitenflächen der Räder, können Ausnehmungen integriert sein, die bevorzugt als Schmierstoffdepot zwecks Reibungsreduktion dienen.

Es bleibt noch hinzuzufügen, dass das Abtriebsrad 11 gemeinsam mit Wälzlager 29 und Mutter 28 des Mutter-Spindeltriebes (respektive Kugelgewindegetriebe) bevorzugt als einstückig vormontierte Baugruppe vorliegt, die im Getriebegehäuse 4 gelagert ist. Die im Getriebegehäuse 4 axial bewegbare Spindel 38 weist ein Vielkeil oder Sternformprofil 39 zur formschlüssig verdrehgesicherten Aufnahme in einer entsprechend ausgeformten Linearführung 40 vom Getriebegehäuse 4 auf. Die Spindel 38 weist weiterhin eine mechanische Schnittstelle 41 auf, die in hier nicht weiter interessierender Art und Weise mit einer Betätigungseinrichtung einer Fahrzeugradbremse kooperiert. Dem Getriebegehäuse 4 ist ebenfalls eine Schnittstelle 42 zur adaptiven Anordnung an einer Fahrzeugbaugruppe zugeordnet.

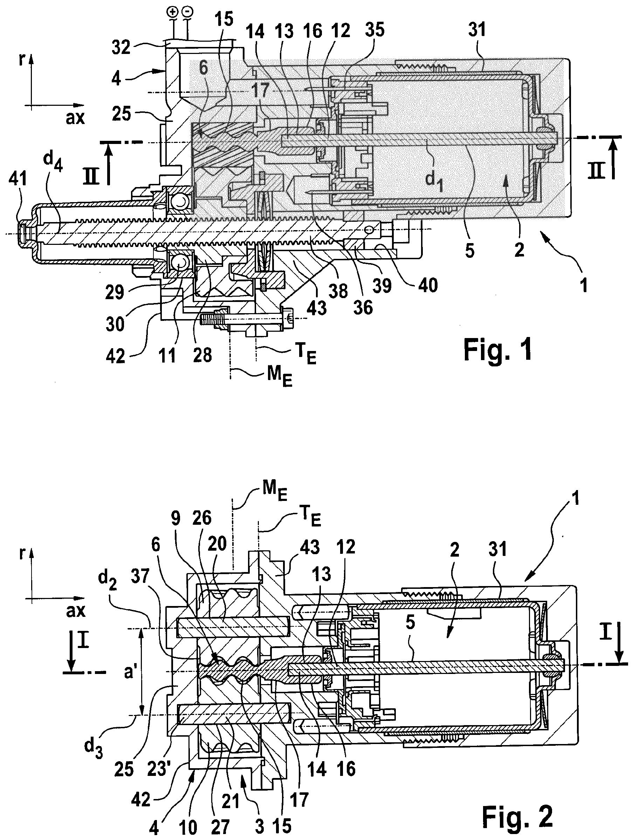

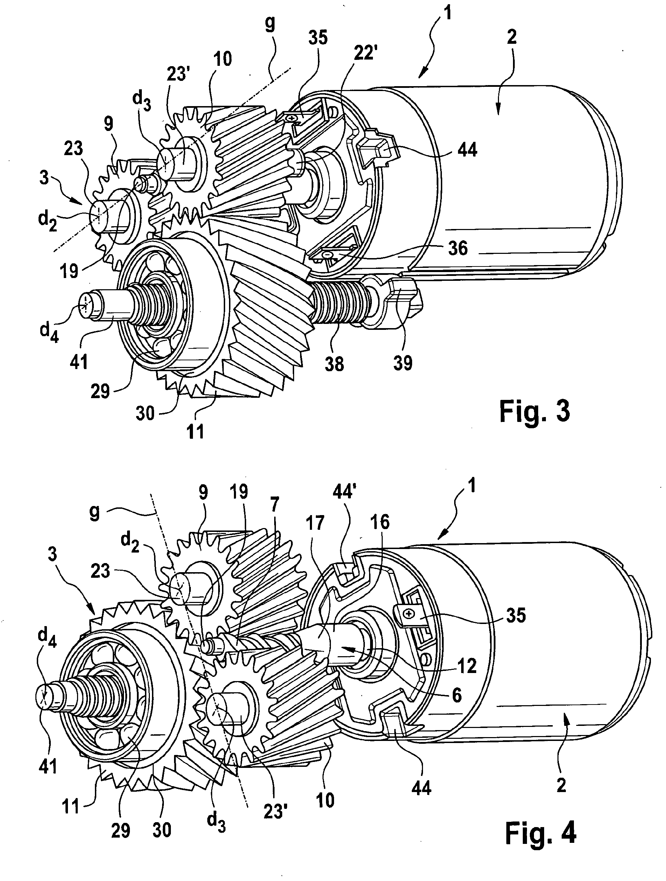

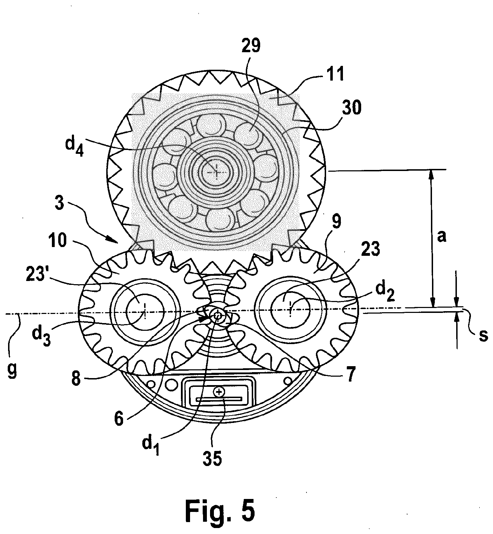

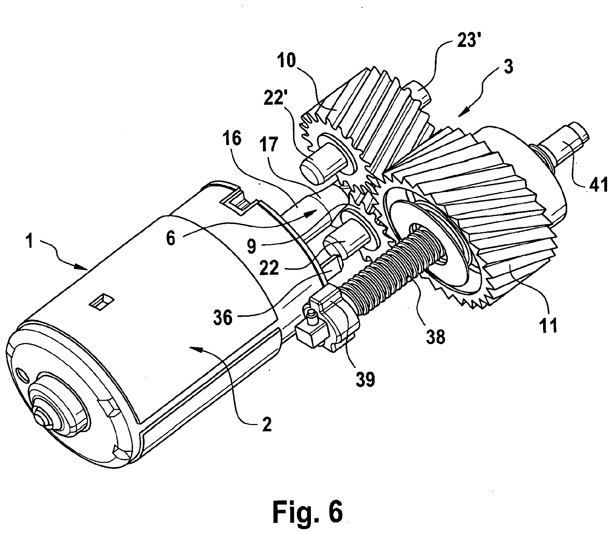

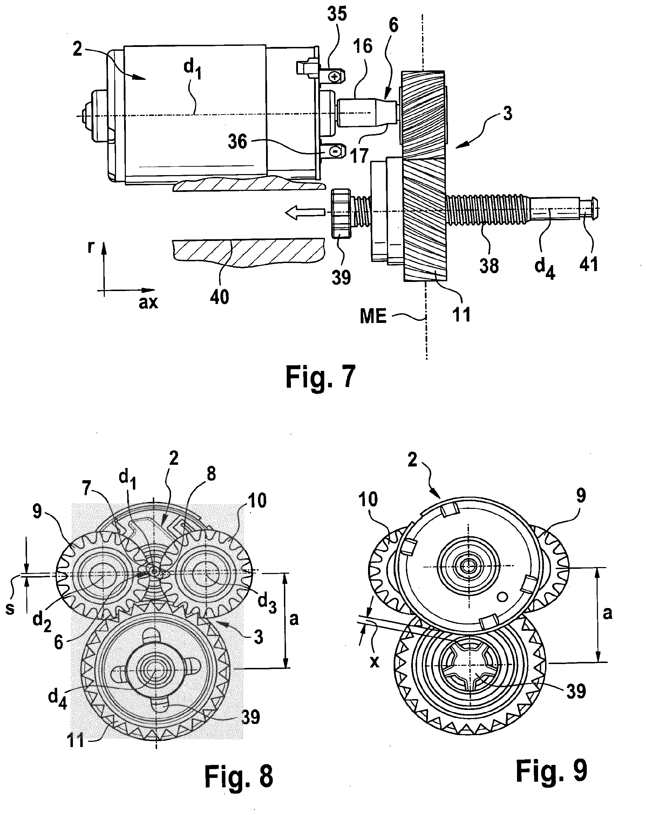

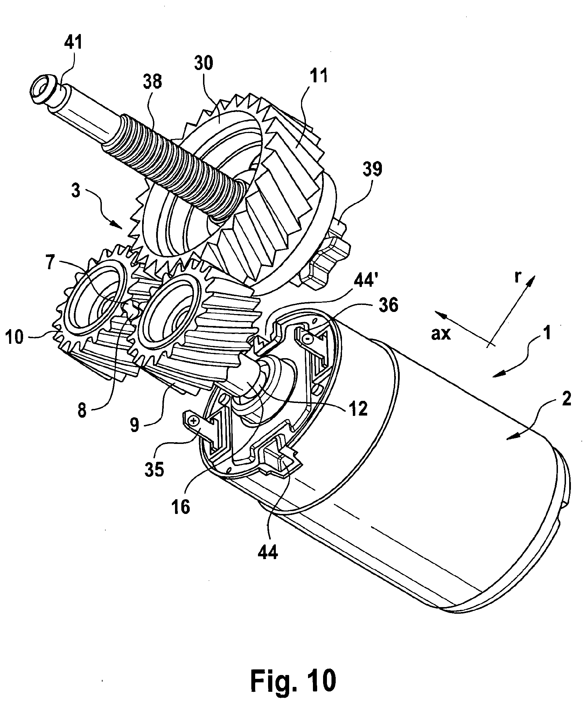

Einzelheiten der Erfindung gehen aus den nachstehenden Patentansprüchen zusammen mit der Beschreibung anhand der Zeichnung wie folgt hervor. Die Einzelheiten und Merkmale von dem verbesserten Aktuator 1 für eine Kraftfahrzeugradbremse mit verbessertem Untersetzungsgetriebe, einschließlich dessen verbesserter Lagerung, wird nachstehend im Einzelnen anhand der Zeichnung exemplarisch beschrieben.

Ein Aktuator 1 umfasst einen elektrischen Motor 2 mit Motorwelle 5, Gehäuse und ein das Gehäuse verschließender Lagerschild, welches bevorzugt Kohlebürsten und Kontaktfahnen 35,36 integriert. Ein Getriebe 3 mit außenverzahnten Rädern umfasst wenigstens eine erste Getriebestufe die ein gesondertes Ritzelbauteil 6 mit einer Evoloidverzahnung aufweist, so dass infolge Getriebeanpassung die als Megaseller bewährten und auch preiswerten Standard- oder Normelektromotorentypen vom Gleichstromtyp unverändert verwendet werden können.

Das Ritzelbauteil 6 ist dabei entweder mittelbar oder unmittelbar mit der Motorwelle 5 verbunden. Die Getriebestufen sind bevorzugt als im Wesentlichen bauähnliche Getriebestufen ausgeführt, die die evoloidverzahnten Getriebeelemente (Ritzel, Zwischenräder, Abtriebsräder) aufweisen. Die erste Getriebestufe verfügt über ein Ritzelbauteil 6 das mittelbar oder unmittelbar mit der Motorwelle 5 gekoppelt ist, und gleichzeitig an seinem Umfang mit den beiden gleichzahnig dimensionierten Zwischenrädern 9,10 synchron kämmt. Die Achsabstände zwischen Ritzelbauteil 6 und den beiden Zwischenrädern 9,10 stimmen identisch überein (symmetrische Anordnung zum Ritzelbauteil 6) . Insbesondere befinden sich die drei Drehachsen d1-d3 in einer Flucht entlang einer Geraden g. Die beiden Zwischenräder 9, 10 kämmen ihrerseits synchron mit einem außenverzahnten Abtriebsrad 11 (Momentenbündelung), dessen Drehachse d4 parallel zu den Drehachsen d1-d3 sowie orthogonal mit Versatz a versetzt zu der Geraden g platziert vorgesehen ist. Sämtliche Räder sind in einer einheitlichen einzigen Montageebene ME arrangiert. Das Abtriebsrad 11 (Getrieberad) kann aus Stahl- oder Kunststoffwerkstoff ausgebildet sein. Der Modul sämtlicher Räder ist einheitlich übereinstimmend.

Die Erfindung ermöglicht eine vereinfachte und dennoch stabile Getriebebauweise und Lagerung anhand von einem frei auskragend mit der Motorwelle gekoppelten Ritzelbauteil 6 mit Freiheitsgrad im Zahneingriffsbereich unter Momentensplittung. Dadurch ist am freien Ende von dem Ritzelbauteil 6 ein Stütz- oder Spurlager rationalisiert. Der multiple, doppelte und symmetrische Lastangriff am Umfang vom Ritzelbauteil 6 vergleichmäßigt die Beanspruchung vom Getriebe 3 derart dass Einzelzahnbeanspruchung reduziert ist. In einer folgenden zweiten Getriebestufe erfolgt die Momentenbündelung indem beide Zwischenräder 9,10 synchron mit dem Abtriebsrad 11 kämmen. Die beanspruchungsgerechte Konstruktion wird durch die besondere Platzierung der Drehachsen d1-d4 befördert. Demzufolge wird durch Aufspaltung und Bündelung im Getriebe 3 hohe Getriebelast ermöglicht, ohne eine Einzelzahnbeanspruchung zu überschreiten.

Unterstützend oder eben unabhängig von von einem elastische auslenkbaren Motorwellenende 12 ist es denkbar, den Elektromotor 2 in Radialrichtung r begrenzt elastisch nachgiebig in seiner sonst hermetisch dichten Motoraufnahme 31 im Getriebegehäuse 4 aufzunehmen. Diese Maßnahme ermöglicht oder unterstützt die beschriebene elastische Selbstorientierung der Motorwelle 5 ebenfalls in geeigneter Weise.

Die Erfindung wurde vorstehend zwar primär zur Applikation bei einer Radbremse mit elektromotorischer Betätigung zur Umsetzung automatisiert fremdbetätigter Brems- wie insbesondere Parkbremseingriffe geschildert. Die Erfindung ist jedoch grundsätzlich nicht auf derartige Applikationen in einem Kraftfahrzeug beschränkt. Vielmehr ist auch eine Anwendung bei anderen Aktuatoren, wie beispielsweise Aktuatoren für Verschlusselemente nämlich Türen, Dächer, Verdecke, Fenster oder Lenkungen prinzipiell denkbar. Denn elektromechanisch betriebene Systeme und Aktuatoren ermöglichen grundsätzlich interessante Fahr-zeug-Zusatzfunktionalitäten, welche elektronisch gesteuert oder geregelt sowie fremdbetätigt, also fahrerunabhängig, umgesetzt werden können.

### Bezugszeichneliste

- 1: Aktuator
- 2: Elektromotor
- 3: Getriebe
- 4: Getriebegehäuse
- 5: Motorwelle
- 6: Ritzelbauteil
- 7: Ritzelzahn
- 8: Ritzelzahn
- 9: Zwischenrad
- 10: Zwischenrad
- 11: Abtriebsrad
- 12: Motorwellenende
- 13: Sackloch
- 14: Zapfen
- 15: Verzahnungsabschnitt
- 16: Schaftabschnitt
- 17: Übergangsabschnitt
- 18: Stirnseite
- 19: Ende
- 20: Stift
- 21: Stift
- 22, 22': Ende
- 23, 23': Ende
- 24: Boden
- 25: Wannenbauteil
- 26: Nabenbohrung
- 27: Nabenbohrung
- 28: Mutter
- 29: Wälzlager
- 30: Lageraufnahme
- 31: Motoraufnahme
- 32: Anschlussschnittstelle
- 33: Kontaktmittel
- 34: Kontaktmittel
- 35: Kontaktfahne
- 36: Kontaktfahne
- 37: Ausnehmung
- 38: Spindel
- 39: Vielkeilprofil
- 40: Linearführung
- 41: Schnittstelle
- 42: Schnittstelle
- 43: Deckelbauteil
- 44: Verdrehsicherung (Motor/Getriebegehäuse)

- ME: Montageebene
- TE: Teilungsebene
- a: Achsabstand
- ax: Axialrichtung
- r: Radialrichtung
- s: Achsversatz
- d1, d2, d3, d4: Drehachse

## Patentansprüche

1. Aktuator für eine Bremse eines Kraftfahrzeugs umfassend einen Elektromotor (2) mit Gehäuse und drehbarer Motorwelle (5), wobei das Gehäuse in einem Getriebegehäuse (4) aufgenommen ist, umfassend zwei schneckenförmig gewundene, evolventenverzahnte Ritzelzähne (7,8) auf der Motorwelle (5), die mit einer schrägen Außenverzahnung von einem Zwischenrad (9, 10) kämmen, das getrieblich mit einem Abtriebsrad (11) einer zweiten Stufe vom Getriebe (3) verbunden ist, **dadurch gekennzeichnet, dass** ein Ritzelbauteil (6) drehfest an einem freien Ende der Motorwelle (5) montiert ist, wobei das Ritzelbauteil (6) an seinem Umfang synchron mit zwei Zwischenrädern (9, 10) kämmt, die in einer gemeinsamen Montageebene ME arrangiert sind.

2. Aktuator für eine Bremse nach Anspruch 1, **dadurch gekennzeichnet, dass** sich das Ritzelbauteil (6) unter Schub zumindest geringfügig sowie gewissermaßen selbsttätig reversibel elastisch im Freiheitsgrad unter Momentensplittung zwischen den beiden Zwischenrädern (9, 10) orientiert.

3. Aktuator für eine Bremse nach Anspruch 1, **dadurch gekennzeichnet, dass** sämtliche Getrieberäder (9, 10) sämtlicher Getriebestufen, einschließlich Abtriebsrad (11), auf einer einheitlichen, gemeinsamen Montageebene (Me) in dem Getriebegehäuse (4) angeordnet sind.

4. Aktuator für eine Bremse nach Anspruch 1, **dadurch gekennzeichnet, dass** zumindest das Ritzelbauteil (6) aus einem metallischen Werkstoff wie insbesondere aus Stahl, Bronze oder pulvermetallurgisch gesintert gefertigt ist, und dass es am freien Ende einer weitgehend glatten metallischen Motorwelle (5) drehfest montiert ist.

5. Aktuator für eine Bremse nach Anspruch 1, **dadurch gekennzeichnet, dass** die zwei Zwischenräder (9, 10) jeweils am Umfang vom Ritzelbauteil (6) im Wesentlichen diametral zueinander versetzt angeordnet sind, so dass das Abtriebsrad (11) der zweiten Stufe mit minimiertem Achsabstand a auf derselben Montagebene (ME) sowie synchron zwischen Schrägverzahnungen der beiden Zwischenräder (10, 11) eingreift.

6. Aktuator für eine Bremse nach Anspruch 1, **dadurch gekennzeichnet, dass** das Ritzelbauteil (6) einen schlanken Übergangsabschnitt (17) aufweist, welcher zwischen einem zylindrischen Schaftabschnitt (16) und einem Verzahnungsabschnitt (15) angeordnet ist.

7. Aktuator für eine Bremse nach Anspruch 1, **dadurch gekennzeichnet, dass** Drehachsen d1, d2, d3 von Ritzelbauteil (6) und Zwischenrädern (9,10) auf einer gemeinsamen Flucht (Gerade g) angeordnet sind, und dass die Drehachsen d1, d2, d3 einschließlich einer Drehachse vom Abtriebsrad (11) parallel angeordnet sind.

8. Aktuator für eine Bremse nach Anspruch 3, **dadurch gekennzeichnet, dass** die beiden Zwischenräder (9, 10) synchron mit dem Abtriebsrad (11) kämmen (Momentenbündelung).

9. Aktuator für eine Bremse nach Anspruch 1, **dadurch gekennzeichnet, dass** Achsabstände zwischen Abtriebsrad (11) und den beiden Zwischenrädern (9,10) identisch ausgebildet sind.

10. Aktuator für eine Bremse nach Anspruch 1, **dadurch gekennzeichnet, dass** das Ritzelbauteil (6) in Radialrichtung r einen Achsversatz s in Relation zu den beiden Zwischenrädern (9, 10) aufweist, wobei die Orientierung von dem Achsversatz s derart ist, dass der Achsabstand a zwischen Abtriebsrad (11) und Ritzelbauteil (6) um den Achsversatz s erhöht ist.

11. Aktuator für eine Bremse nach Anspruch 1, **dadurch gekennzeichnet, dass** die Zwischenräder (10,11) auf zylindrischen Stiften (20,21) drehbar gelagert sind, welche mit Enden (22, 22', 23, 23') im Getriebegehäuse (4) aufgenommen sind

12. Aktuator für eine Bremse nach Anspruch 1, **dadurch gekennzeichnet, dass** das Abtriebsrad (11) gemeinsam mit einer Mutter (28) mit Hilfe von einem Wälzlager (29) im Getriebegehäuse (4) drehbar und axial fest gelagert ist.

13. Aktuator für eine Bremse nach Anspruch 1, **dadurch gekennzeichnet, dass** das Wälzlager (29) zur Ausbildung einer Vormontagebaugruppe in eine Lageraufnahme (30) fixiert ist.

14. Aktuator für eine Bremse nach Anspruch 1, **dadurch gekennzeichnet, dass** das Getriebegehäuse (4) wenigstens ein topfförmig offen vertieftes Wannenbauteil (25) sowie ein weitestgehend ebenes Deckelbauteil (43) aufweist, deren Teilungsebene (TE) im Abstand zur Montageebene (ME) vorgesehen sind.

15. Aktuator für eine Bremse nach Anspruch 1, **dadurch gekennzeichnet, dass** das Deckelbauteil (43) eine Motoraufnahme (31) aufweist.

16. Aktuator für eine Bremse nach Anspruch 1, **dadurch gekennzeichnet, dass** das Getriebegehäuse (4) eine elektrische Anschlussschnittstelle (32) mit elektrischen Kontaktmitteln (33,34) aufweist, und dass elektrische Kontaktfahnen (35,36) vom Elektromotor (2) über elektrische Verbindungsmittel mit den Kontaktmitteln (33,34) elektrisch verbunden ist.

17. Aktuator für eine Bremse nach Anspruch 1, **dadurch gekennzeichnet, dass** die Mutter (28) mit einer axial verschiebbar im Getriebegehäuse (4) gelagerten Spindel (38) kooperiert, die formschlüssig insbesondere durch ein Vielkeil- oder Sternprofil (39) verdrehgesichert in einer Linearführung (40) vom Getriebegehäuse (4) aufgenommen ist.

18. Aktuator für eine Bremse eines Kraftfahrzeugs zumindest nach den Merkmalen der Patentansprüche 1 und 2, **dadurch gekennzeichnet, dass** der Elektromotor (2) in Radialrichtung r begrenzt elastisch nachgiebig in seiner Motoraufnahme (31) im Getriebegehäuse (4) aufgenommen ist.

## Claims

1. Actuator for a motor vehicle brake, comprising an electric motor (2) with housing and rotatable motor shaft (5), wherein the housing is accommodated in a gearbox casing (4), comprising two helically wound, involute-toothed pinion teeth (7, 8) on the motor shaft (5), which mesh with an oblique external toothing of an intermediate gear (9, 10), which has a geared connection to an output gear (II) of a second stage of the gearbox (3), **characterized in that** a pinion component (6) is co-rotationally mounted on a free end of the motor shaft (5), wherein the pinion component (6) meshes synchronously on its circumference with two intermediate gears (9, 10) which are arranged in a common mounting plane ME.

2. Actuator for a brake according to Claim 1, **characterized in that** under thrust the pinion component (6) is oriented at least slightly and to a certain extent automatically reversibly elastically in the degree of freedom with torque splitting between the two intermediate gears (9, 10) .

3. Actuator for a brake according to Claim 1, **characterized in that** all the gear wheels (9, 10) of all the gear stages, including output gear (11), are arranged on a uniform, common mounting plane (Me) in the gearbox casing (4).

4. Actuator for a brake according to Claim 1, **characterized in that** at least the pinion component (6) is made from a metallic material such as in particular from steel, bronze or powder-metallurgically sintered, and **in that** it is co-rotationally mounted on the free end of a largely smooth metallic motor shaft (5).

5. Actuator for a brake according to Claim 1, **characterized in that** the two intermediate gears (9, 10) are each arranged offset substantially diametrically relative to each other on the circumference of the pinion component (6), so that the output gear (11) of the second stage engages with minimized axial spacing a on the same mounting plane (ME) and synchronously between oblique toothing of the two intermediate gears (10, 11).

6. Actuator for a brake according to Claim 1, **characterized in that** the pinion component (6) has a slim transition section (17), which is arranged between a cylindrical shaft section (16) and a toothing section (15).

7. Actuator for a brake according to Claim 1, **characterized in that** axes of rotation d1, d2, d3 of pinion component (6) and intermediate gears (9, 10) are arranged on a common alignment (straight line g), and **in that** the axes of rotation d1, d2, d3, including an axis of rotation of output gear (11), are arranged in parallel.

8. Actuator for a brake according to Claim 3, **characterized in that** the two intermediate gears (9, 10) mesh synchronously with the output gear (11) (torque bunching).

9. Actuator for a brake according to Claim 1, **characterized in that** axial spacings between output gear (11) and the two intermediate gears (9, 10) are identical.

10. Actuator for a brake according to Claim 1, **characterized in that** the pinion component (6) has an axial offset s in relation to the two intermediate gears (9, 10) in the radial direction r, wherein the orientation of the axial offset s is such that the axial spacing a between output gear (11) and pinion component (6) is increased by the axial offset s.

11. Actuator for a brake according to Claim 1, **characterized in that** the intermediate gears (10, 11) are rotatably mounted on cylindrical pins (20, 21), which are accommodated with ends (22, 22', 23, 23') in the gearbox casing (4).

12. Actuator for a brake according to Claim 1, **characterized in that** the output gear (11), together with a nut (28), is rotatably and axially fixedly mounted in the gearbox casing (4) with the aid of a rolling bearing (29).

13. Actuator for a brake according to Claim 1, **characterized in that** the rolling bearing (29) is fixed in a bearing holder (30) to form a pre-assembly module.

14. Actuator for a brake according to Claim 1, **characterized in that** the gearbox casing (4) has at least one pot-shaped, open, recessed well component (25) and a largely flat cover component (43), of which the parting plane (TE) is provided at a distance from the mounting plane (ME).

15. Actuator for a brake according to Claim 1, **characterized in that** the cover component (43) has a motor receptacle (31).

16. Actuator for a brake according to Claim 1, **characterized in that** the gearbox casing (4) has an electric connection interface (32) with electric contact means (33, 34), and **in that** electric contact tabs (35, 36) from the electric motor (2) are connected electrically to the contact means (33, 34) via electric connecting means.

17. Actuator for a brake according to Claim 1, **characterized in that** the nut (28) cooperates with a spindle (38) axially displaceably mounted in the gearbox casing (4), which is held captively by the gearbox casing (4) by a form fit, in particular by a spline or star profile (39), in a linear guide (40) .

18. Actuator for a brake of a motor vehicle, at least according to the features of Patent Claims 1 and 2, **characterized in that** the electric motor (2) is held in its motor receptacle (31) in the gearbox casing (4) elastically flexibly to a limited extent in the radial direction r.

## Revendications

1. Actionneur destiné à un frein d'un véhicule automobile, l'actionneur comprenant un moteur électrique (2) pourvu d'un carter et d'un arbre de moteur rotatif (5), le carter étant logé dans un carter d'engrenages (4), deux dents de pignon à développante (7, 8) étant enroulées de manière hélicoïdale sur l'arbre de moteur (5) et s'engrenant avec une denture extérieure oblique d'un pignon intermédiaire (9, 10) qui est relié en entraînement à un pignon de sortie (11) d'un deuxième étage de la transmission (3), **caractérisé en ce qu'**un élément de pignon (6) est monté solidairement en rotation à une extrémité libre de l'arbre de moteur (5), l'élément de pignon (6) s'engrenant sur sa périphérie de manière synchrone avec deux pignons intermédiaires (9, 10) qui sont agencés dans un plan de montage commun ME.

2. Actionneur destiné à un frein selon la revendication 1, **caractérisé en ce que** l'élément de pignon (6) s'oriente entre les deux pignons intermédiaires (9, 10) par fractionnement du couple au moins légèrement par poussée et dans une certaine mesure automatiquement de manière élastique et réversible dans le degré de liberté.

3. Actionneur destiné à un frein selon la revendication 1, **caractérisé en ce que** tous les pignons d'engrenages (9, 10) de tous les étages d'engrenages, y compris le pignon de sortie (11), sont disposés dans un plan de montage commun et uniforme (Me) dans le carter d'engrenages (4).

4. Actionneur destiné à un frein selon la revendication 1, **caractérisé en ce qu'**au moins l'élément de pignon (6) est en une matière métallique telle que notamment de l'acier, du bronze ou de la poudre de métal frittée, et **en ce qu'**il est monté à rotation à l'extrémité libre d'un arbre de moteur métallique (5) en grande partie lisse.

5. Actionneur destiné à un frein selon la revendication 1, **caractérisé en ce que** les deux pignons intermédiaires (9, 10) sont décalés chacun de manière sensiblement diamétralement opposée l'un à l'autre à la périphérie de l'élément de pignon (6) de sorte que le pignon de sortie (11) du deuxième étage s'engrène à une distance axiale minimisée a dans le même plan de montage (ME) et de manière synchrone entre des dentures obliques des deux pignons intermédiaires (10, 11).

6. Actionneur destiné à un frein selon la revendication 1, **caractérisé en ce que** l'élément de pignon (6) comporte une mince partie de transition (17) qui est disposée entre une partie formant arbre cylindrique (16) et une partie formant denture (15).

7. Actionneur destiné à un frein selon la revendication 1, **caractérisé en ce que** les axes de rotation d1, d2, d3 de l'élément de pignon (6) et des pignons intermédiaires (9, 10) sont disposés sur un alignement commun (droite g) et **en ce que** les axes de rotation d1, d2, d3, y compris un axe de rotation du pignon de sortie (11), sont disposés en parallèle.

8. Actionneur destiné à un frein selon la revendication 3, **caractérisé en ce que** les deux pignons intermédiaires (9, 10) s'engrènent de manière synchrone avec le pignon de sortie (11) (mise en commun instantanée).

9. Actionneur destiné à un frein selon la revendication 1, **caractérisé en ce que** les distances axiales entre le pignon de sortie (11) et les deux pignons intermédiaires (9, 10) sont conçues de manière identique.

10. Actionneur destiné à un frein selon la revendication 1, **caractérisé en ce que** l'élément de pignon (6) présente dans la direction radiale r un décalage axial s par rapport aux deux pignons intermédiaires (9, 10), l'orientation du décalage axial s étant telle que la distance axiale a entre le pignon de sortie (11) et l'élément de pignon (6) soit augmentée du décalage axial s.

11. Actionneur destiné à un frein selon la revendication 1, **caractérisé en ce que** les pignons intermédiaires (10, 11) sont montés à rotation sur des tiges cylindriques (20, 21) qui sont logées, avec des extrémités (22, 22', 23, 23'), dans le carter d'engrenages (4).

12. Actionneur destiné à un frein selon la revendication 1, **caractérisé en ce que** le pignon de sortie (11) est monté dans le carter d'engrenages (4) de manière rotative et axialement fixe, conjointement avec un écrou (28), à l'aide d'un palier à roulement (29) .

13. Actionneur destiné à un frein selon la revendication 1, **caractérisé en ce que** le palier à roulement (29) est fixé dans un logement de palier (30) pour former un ensemble de pré-montage.

14. Actionneur destiné à un frein selon la revendication 1, **caractérisé en ce que** le carter d'engrenages (4) comporte au moins un composant formant cuvette (25), creusé de manière à être ouvert en forme de pot, et un élément de recouvrement (43) essentiellement plat dont le plan de division (TE) est prévu à distance du plan de montage (ME).

15. Actionneur destiné à un frein selon la revendication 1, **caractérisé en ce que** le composant de recouvrement (43) comporte un support de moteur (31).

16. Actionneur destiné à un frein selon la revendication 1, **caractérisé en ce que** le carter d'engrenages (4) comporte une interface de connexion électrique (32) pourvue de moyens de contact électriques (33, 34) et **en ce que** des cosses de contact électriques (35, 36) du moteur électrique (2) sont connectées électriquement aux moyens de contact (33, 34) par le biais de moyens de liaison électriques.

17. Actionneur destiné à un frein selon la revendication 1, **caractérisé en ce que** l'écrou (28) coopère avec une broche (38) qui est montée de manière coulissante axialement dans le carter d'engrenages (4) et qui est reçue dans un guide linéaire (40) du carter de transmission (4) par complémentarité de formes notamment en étant bloquée en rotation grâce à un profil cannelé ou en étoile (39).

18. Actionneur destiné à un frein d'un véhicule automobile au moins selon les caractéristiques des revendications 1 et 2, **caractérisé en ce que** le moteur électrique (2) est logé dans son logement de moteur (31) situé dans le carter d'engrenages (4) de manière flexible élastiquement et de manière limitée dans la direction radiale r.
